(19) Europäisches Patentamt
European Patent Office
Office européen des brevets

(11) EP 2 982 506 B1

(12) **EUROPEAN PATENT SPECIFICATION**

(45) Date of publication and mention of the grant of the patent:
**11.05.2022 Bulletin 2022/19**

(21) Application number: **14775227.3**

(22) Date of filing: **28.03.2014**

(51) International Patent Classification (IPC):
***B32B 9/00*** $^{(2006.01)}$ ***B32B 27/08*** $^{(2006.01)}$
***B32B 27/16*** $^{(2006.01)}$ ***B32B 27/26*** $^{(2006.01)}$
***B32B 27/30*** $^{(2006.01)}$

(52) Cooperative Patent Classification (CPC):
**B32B 9/00; B32B 27/08; B32B 27/16; B32B 27/26; B32B 27/308;** B32B 2250/40; B32B 2307/306; B32B 2307/412; B32B 2307/7244; B32B 2457/20

(86) International application number:
**PCT/JP2014/059327**

(87) International publication number:
**WO 2014/157686 (02.10.2014 Gazette 2014/40)**

(54) **LAMINATE, METHOD FOR PRODUCING SAME, MEMBER FOR ELECTRONIC DEVICE, AND ELECTRONIC DEVICE**

LAMINAT, VERFAHREN ZUR HERSTELLUNG DAVON, TEIL FÜR ELEKTRONISCHE VORRICHTUNG UND ELEKTRONISCHE VORRICHTUNG

STRATIFIÉ, PROCÉDÉ DE FABRICATION DE CE STRATIFIÉ, ÉLÉMENT POUR DISPOSITIF ÉLECTRONIQUE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013 JP 2013074067**

(43) Date of publication of application:
**10.02.2016 Bulletin 2016/06**

(73) Proprietor: **LINTEC Corporation**
**Tokyo 173-0001 (JP)**

(72) Inventors:
- **SUZUKI, Yuuta**
  **Tokyo 173-0001 (JP)**
- **NAGAMOTO, Koichi**
  **Tokyo 173-0001 (JP)**
- **KONDO, Takeshi**
  **Tokyo 173-0001 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**WO-A1-2012/014653**
**WO-A1-2012/115175**
**WO-A1-2012/115175**
**JP-A- 2006 297 737**
**JP-A- 2009 511 290**
**JP-A- 2010 173 134**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 982 506 B1

## Description

### TECHNICAL FIELD

The present invention relates to a laminate that exhibits an excellent gas barrier capability, and rarely shows deterioration in gas barrier capability even when a thermal load is applied, a method for producing the laminate, an electronic device member that includes the laminate, and an electronic device that includes the electronic device member.

### BACKGROUND ART

In recent years, a gas barrier film (in which an inorganic layer (gas barrier layer) is stacked on a transparent plastic film) has been used instead of a glass sheet (plate) as an electrode substrate used for displays (e.g., liquid crystal display and electroluminescence (EL) display) in order to implement a reduction in thickness, a reduction in weight, flexibility, and the like.
It has been proposed to further improve the gas barrier capability of a gas barrier film by utilizing an inorganic layer and an organic layer in combination.
For example, Patent Documents 1 and 2 disclose a laminate in which at least one organic layer (formed using a specific monomer) and at least one inorganic layer are alternately stacked on at least one side of a base.
Patent Document 3 discloses a laminate that includes a plastic film, and a unit that is provided on the plastic film, and includes at least one organic layer and at least two inorganic layers.
JP 2006 297737 A relates to the problem to provide a plastic film having high barrier properties, transparency, and an ultraviolet cutoff function. As a solution to the problem, the document describes a gas-barrier film which comprises at least one gas-barrier layer of an inorganic compound formed on a transparent, flexible support substrate, wherein the water vapor transmittance at 40 °C and in relative humidity 90% of the film is 0.005 g/m$^2$/day or below, and the ultraviolet transmittance of wavelength 350 nm is 10% or below.
WO 2012/115175 A1 describes a layered barrier product which has a structure configured of adjoining layers that comprise an inorganic layer, an organic layer, and an inorganic layer in this order, wherein the organic layer was obtained by applying a polymerizable composition to form a layer thereof and curing the layer, the polymerizable composition comprising: a (meth)acrylate which, at 25 °C and 1 atm, is a solid or a liquid that in the uncured state has a viscosity of 400 mPa·s or higher and which has a (meth)acrylic equivalent of 260 or less, the amount of the (meth)acrylate being 50 wt.% or more on a solid basis; and a silane coupling agent which contains a (meth)acryloyloxy group.

### RELATED-ART DOCUMENT

### PATENT DOCUMENT

Patent Document 1: JP-A-2003-335880

Patent Document 2: JP-A-2003-53881

Patent Document 3: JP-A-2007-253588

### SUMMARY OF THE INVENTION

### TECHNICAL PROBLEM

The laminates disclosed in Patent Documents 1 to 3 exhibit an excellent gas barrier capability, but may show a significant deterioration in gas barrier capability when a thermal load is applied due to the difference in coefficient of expansion between the inorganic layer and the organic layer. Therefore, the laminates disclosed in Patent Documents 1 to 3 are not suitable as a member used for an electronic device that generates heat when driven.
The invention was conceived in view of the above situation. An object of the invention is to provide a laminate that exhibits an excellent gas barrier capability, and rarely shows deterioration in gas barrier capability even when a thermal load is applied, an electronic device member that includes the laminate, and an electronic device that includes the electronic device member.

SOLUTION TO PROBLEM

The inventors of the invention conducted extensive studies in order to solve the above problem. As a result, the inventors found that a laminate that exhibits an excellent gas barrier capability, and rarely shows deterioration in gas barrier capability even when a thermal load is applied, can be obtained by providing a specific gas barrier unit that includes two barrier layers and an organic intermediate layer on a base. This finding has led to the completion of the invention.

According to the present invention, the object is achieved by a laminate having the characteristics of claim 1. The invention concerns also a corresponding method of production as defined in claim 11. Further, preferred embodiments are covered by the dependent claims.

ADVANTAGEOUS EFFECTS OF THE INVENTION

The aspects of the invention thus provide a laminate that exhibits an excellent gas barrier capability, and rarely shows deterioration in gas barrier capability even when a thermal load is applied, a method for producing the laminate, an electronic device member that includes the laminate, and an electronic device that includes the electronic device member.

BRIEF DESCRIPTION OF DRAWINGS

FIG. 1 is a schematic view illustrating an example of a laminate according to one embodiment of the invention.

DESCRIPTION OF EMBODIMENTS

A laminate, a method for producing a laminate, an electronic device member, and an electronic device according to exemplary embodiments of the invention are described in detail below.

1) Laminate

A laminate according to one embodiment of the invention includes a base and a gas barrier unit, the gas barrier unit including a first barrier layer, a second barrier layer, and an organic intermediate layer that is situated between the first barrier layer and the second barrier layer, and has a modulus of elasticity at 90°C of 1.5 GPa or more, the ratio (X/Y) of the thickness (X) of the organic intermediate layer to the thickness (Y1) of the first barrier layer being 3 to 18, and the ratio (X/Y2) of the thickness (X) of the organic intermediate layer to the thickness (Y2) of the second barrier layer being 3 to 18, characterized in that the organic intermediate layer is formed of a cured product of an energy ray-curable composition and the energy ray-curable composition comprises a polyfunctional (meth)acrylic-based compound and silica microparticles having a functional group.

(1) Base

The base included in the laminate according to one embodiment of the invention is not particularly limited as long as the base can support the gas barrier unit. A film-like or sheet-like material is normally used as the base.

The thickness of the base is not particularly limited, and may be appropriately determined taking account of the intended use of the laminate. The thickness of the base is normally 0.5 to 500 μm, and preferably 1 to 100 μm. Note that the expression "A to B" used herein in connection with a numerical range means A or more and B or less.

A material for forming the base is not particularly limited as long as the material is suitable for the intended use of the laminate according to one embodiment of the invention.

Examples of the material for forming the base include a polyimide, a polyamide, a polyamideimide, a polyphenylene ether, a polyether ketone, a polyether ether ketone, a polyolefin, a polyester, a polycarbonate, a polysulfone, a polyether sulfone, a polyphenylene sulfide, an acrylic-based resin, a cycloolefin-based polymer, an aromatic polymer, and the like.

Among these, a polyester, a polyamide, a polysulfone, a polyether sulfone, a polyphenylene sulfide, and a cycloolefin-based polymer are preferable due to excellent transparency and versatility. It is more preferable to use a polyester or a cycloolefin-based polymer.

Examples of the polyester include polyethylene terephthalate, polybutylene terephthalate, polyethylene naphthalate, polyarylate, and the like.

Examples of the polyamide include a wholly aromatic polyamide, nylon 6, nylon 66, a nylon copolymer, and the like.

Examples of the cycloolefin-based polymer include a norbornene-based polymer, a monocyclic olefin-based polymer, a cyclic conjugated diene-based polymer, a vinyl alicyclic hydrocarbon-based polymer, and a hydrogenated product thereof. Specific examples of the cycloolefin-based polymer include APEL (ethylene-cycloolefin copolymer manufactured by Mitsui Chemicals Inc.), ARTON (norbornene-based polymer manufactured by JSR Corporation), ZEONOR (norbornene-based polymer manufactured by Zeon Corporation), and the like.

(2) Gas barrier unit

The gas barrier unit included in the laminate according to one embodiment of the invention includes the first barrier layer, the second barrier layer, and the organic intermediate layer that is situated between the first barrier layer and the second barrier layer, and has a modulus of elasticity at 90°C of 1.5 GPa or more, the ratio (X/Y1) of the thickness (X) of the organic intermediate layer to the thickness (Y1) of the first barrier layer being 3 to 18, and the ratio (X/Y2) of the thickness (X) of the organic intermediate layer to the thickness (Y2) of the second barrier layer being 3 to 18.
The laminate according to one embodiment of the invention that includes the gas barrier unit exhibits an excellent gas barrier capability, and rarely shows deterioration in gas barrier capability even when a thermal load is applied.

Barrier layer

The first barrier layer and the second barrier layer included in the gas barrier unit function as a gas barrier layer that has a capability to suppress transmission of gas (e.g., oxygen and water vapor) (i.e., gas barrier capability). Since the laminate according to one embodiment of the invention includes the gas barrier unit that includes the first barrier layer and the second barrier layer (hereinafter may be collectively referred to as "barrier layer"), the laminate according to one embodiment of the invention exhibits an excellent gas barrier capability.
The first barrier layer and the second barrier layer may be identical or different as to the type and the thickness.
Note that the barrier layer that is provided on either side of the organic intermediate layer and situated on the side of the base is referred to as the first barrier layer, and the barrier layer that is provided on either side of the organic intermediate layer and situated on the side opposite to the base is referred to as the second barrier layer.
The thickness of the first barrier layer and the thickness of the second barrier layer are not particularly limited as long as the ratio (X/Y1) of the thickness (X) of the organic intermediate layer to the thickness (Y1) of the first barrier layer is 3 to 18, and the ratio (X/Y2) of the thickness (X) of the organic intermediate layer to the thickness (Y2) of the second barrier layer is 3 to 18 (described later). The thickness (Y1) of the first barrier layer and the thickness (Y2) of the second barrier layer are normally 10 to 400 nm, and preferably 50 to 350 nm.
Examples of the barrier layer include a barrier layer that is formed of an inorganic deposited film, a barrier layer that is obtained by subjecting a layer that includes a polymer compound (hereinafter may be referred to as "polymer layer") to a modification treatment (e.g., ion implantation treatment), and the like. Note that a barrier layer that is obtained by subjecting a polymer layer to a modification treatment does not refer to only the modified area (e.g., ion-implanted area), but refers to "modified polymer layer".
Examples of the inorganic deposited film include an inorganic deposited film obtained by depositing an inorganic compound, and an inorganic deposited film obtained by depositing a metal.
Examples of the inorganic compound used as the raw material for forming the inorganic deposited film include an inorganic oxide such as silicon oxide, aluminum oxide, magnesium oxide, zinc oxide, indium oxide, and tin oxide; an inorganic nitride such as silicon nitride, aluminum nitride, and titanium nitride; an inorganic carbide; an inorganic sulfide; an inorganic oxynitride such as silicon oxynitride; an inorganic oxycarbide; an inorganic carbonitride; an inorganic oxycarbonitride; and the like.
Examples of the metal used as the raw material for forming the inorganic deposited film include aluminum, magnesium, zinc, tin, and the like.
These raw materials may be used either alone or in combination.
An inorganic deposited film that is formed using an inorganic oxide, an inorganic nitride, or a metal as the raw material is preferable from the viewpoint of gas barrier capability. An inorganic deposited film that is formed using an inorganic oxide or an inorganic nitride as the raw material is preferable from the viewpoint of transparency.
The inorganic deposited film may be formed using a physical vapor deposition (PVD) method such as a vacuum deposition method, a sputtering method, or an ion plating method, or a chemical vapor deposition (CVD) method such as a thermal CVD method, a plasma CVD method, or a photo-CVD method, for example.
Examples of the polymer compound that is used when forming the barrier layer by subjecting a polymer layer to a modification treatment include a silicon-containing polymer compound (e.g., polyorganosiloxane and polysilazane-based compound), a polyimide, a polyamide, a polyamide-imide, a polyphenylene ether, a polyether ketone, a polyether ether ketone, a polyolefin, a polyester, a polycarbonate, a polysulfone, a polyether sulfone, a polyphenylene sulfide, a polyarylate, an acrylic-based resin, a cycloolefin-based polymer, an aromatic polymer, and the like.

These polymer compounds may be used either alone or in combination.

Among these, a silicon-containing polymer compound is preferable as the polymer compound since a barrier layer that exhibits an excellent gas barrier capability can be formed. Examples of the silicon-containing polymer compound include a polysilazane-based compound, a polycarbosilane-based compound, a polysilane-based compound, a polyorganosiloxane-based compound, and the like. Among these, a polysilazane-based compound is preferable since a barrier layer that exhibits an excellent gas barrier capability can be formed.

The polysilazane-based compound is a polymer compound that includes a repeating unit that includes an -Si-N- bond (silazane bond) in the molecule. A compound that includes a repeating unit represented by the following formula (1) is preferable as the polysilazane-based compound.

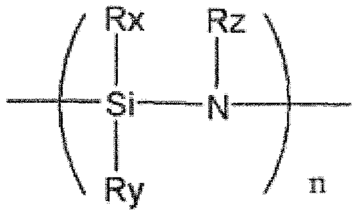

(1)

The number average molecular weight of the polysilazane-based compound is not particularly limited, but is preferably 100 to 50,000.

Note that n in the formula (1) is an arbitrary natural number.

Rx, Ry, and Rz are independently a hydrogen atom or a non-hydrolyzable group such as a substituted or unsubstituted alkyl group, a substituted or unsubstituted cycloalkyl group, a substituted or unsubstituted alkenyl group, a substituted or unsubstituted aryl group, or an alkylsilyl group.

Examples of the alkyl group (that is substituted or unsubstituted) include an alkyl group having 1 to 10 carbon atoms (e.g., methyl group, ethyl group, n-propyl group, isopropyl group, n-butyl group, isobutyl group, sec-butyl group, t-butyl group, n-pentyl group, isopentyl group, neopentyl group, n-hexyl group, n-heptyl group, and n-octyl group).

Examples of the cycloalkyl group (that is substituted or unsubstituted) include a cycloalkyl group having 3 to 10 carbon atoms (e.g., cyclobutyl group, cyclopentyl group, cyclohexyl group, and cycloheptyl group).

Examples of the alkenyl group (that is substituted or unsubstituted) include an alkenyl group having 2 to 10 carbon atoms (e.g., vinyl group, 1-propenyl group, 2-propenyl group, 1-butenyl group, 2-butenyl group, and 3-butenyl group).

Examples of the substituent that may substitute the alkyl group, the cycloalkyl group, and the alkenyl group include a halogen atom such as a fluorine atom, a chlorine atom, a bromine atom, and an iodine atom; a hydroxyl group; a thiol group; an epoxy group; a glycidoxy group; a (meth)acryloyloxy group; a substituted or unsubstituted aryl group such as a phenyl group, a 4-methylphenyl group, and a 4-chlorophenyl group; and the like.

Examples of the aryl group (that is substituted or unsubstituted) include an aryl group having 6 to 10 carbon atoms (e.g., phenyl group, 1-naphthyl group, and 2-naphthyl group).

Examples of the substituent that may substitute the aryl group include a halogen atom such as a fluorine atom, a chlorine atom, a bromine atom, and an iodine atom; an alkyl group having 1 to 6 carbon atoms, such as a methyl group and an ethyl group; an alkoxy group having 1 to 6 carbon atoms, such as a methoxy group and an ethoxy group; a nitro group; a cyano group; a hydroxyl group; a thiol group; an epoxy group; a glycidoxy group; a (meth)acryloyloxy group; a substituted or unsubstituted aryl group such as a phenyl group, a 4-methylphenyl group, and a 4-chlorophenyl group; and the like.

Examples of the alkylsilyl group include a trimethylsilyl group, a triethylsilyl group, a triisopropylsilyl group, a tri-t-butylsilyl group, a methyldiethylsilyl group, a dimethylsilyl group, a diethylsilyl group, a methylsilyl group, an ethylsilyl group, and the like.

Among these, a hydrogen atom, an alkyl group having 1 to 6 carbon atoms, or a phenyl group is preferable as Rx, Ry, and Rz. A hydrogen atom is particularly preferable as Rx, Ry, and Rz.

The polysilazane-based compound that includes the repeating unit represented by the formula (1) may be an inorganic polysilazane in which all of Rx, Ry, and Rz are hydrogen atoms, or an organic polysilazane in which at least one of Rx, Ry, and Rz is not a hydrogen atom.

A modified polysilazane may be used as the polysilazane-based compound. For example, the modified polysilazane disclosed in JP-A-62-195024, JP-A-2-84437, JP-A-63-81122, JP-A-1-138108, JP-A-2-175726, JP-A-5-238827, JP-A-5-238827, JP-A-6-122852, JP-A-6-306329, JP-A-6-299118, JP-A-9-31333, JP-A-5-345826, JP-A-4-63833, or the like may be used as the polysilazane-based compound.

Among these, a perhydropolysilazane in which all of Rx, Ry, and Rz are hydrogen atoms is preferable as the polysilazane-based compound from the viewpoint of availability and a capability to form an ion-implanted layer that

exhibits an excellent gas barrier capability.

A product commercially available as a glass coating material or the like may be used directly as the polysilazane-based compound.

These polysilazane-based compounds may be used either alone or in combination.

The polymer layer may include an additional component other than the polymer compound as long as the object of the invention is not impaired. Examples of the additional component include a curing agent, an aging preventive, a light stabilizer, a flame retardant, and the like.

The content of the polymer compound in the polymer layer is preferably 50 mass% or more, and more preferably 70 mass% or more, since a barrier layer that exhibits an excellent gas barrier capability can be obtained.

The thickness of the polymer layer is not particularly limited, but is preferably 50 to 300 nm, and more preferably 50 to 200 nm.

A gas barrier laminate that exhibits a sufficient gas barrier capability can be obtained even when the polymer layer has a thickness at a nanometer level.

The polymer layer may be formed using an arbitrary method. For example, the polymer layer may be formed by preparing a polymer layer-forming solution that includes at least one polymer compound, an optional additional component, a solvent, and the like, applying the polymer layer-forming solution using a known method, and drying the resulting film.

Examples of the solvent used to prepare the polymer layer-forming solution include an aromatic hydrocarbon-based solvent such as benzene and toluene; an ester-based solvent such as ethyl acetate and butyl acetate; a ketone-based solvent such as acetone, methyl ethyl ketone, and methyl isobutyl ketone; an aliphatic hydrocarbon-based solvent such as n-pentane, n-hexane, and n-heptane; an alicyclic hydrocarbon-based solvent such as cyclopentane and cyclohexane; and the like.

These solvents may be used either alone or in combination.

The polymer layer-forming solution may be applied using a bar coating method, a spin coating method, a dipping method, a roll coating method, a gravure coating method, a knife coating method, an air-knife coating method, a roll knife coating method, a die coating method, a screen printing method, a spray coating method, a gravure offset method, or the like.

The film formed by applying the polymer layer-forming solution may be dried using a known drying method such as hot-air drying, heat roll drying, or infrared irradiation. The heating temperature is normally 60 to 130°C. The heating time is normally several seconds to several tens of minutes.

Examples of the modification treatment used for the polymer layer include an ion implantation treatment, a plasma treatment, a UV irradiation treatment, a heat treatment, and the like.

The ion implantation treatment implants ions into the polymer layer to modify the polymer layer (described layer).

The plasma treatment exposes the polymer layer to plasma to modify the polymer layer. The plasma treatment may be implemented using the method disclosed in JP-A-2012-106421, for example.

The UV irradiation treatment applies UV rays to the polymer layer to modify the polymer layer. The UV irradiation treatment may be implemented using the method disclosed in JP-A-2013-226757, for example.

It is preferable to use the ion implantation treatment since the inner area of the polymer layer can also be efficiently modified without roughening the surface of the polymer layer, and a gas barrier layer that exhibits an excellent gas barrier capability can be formed.

Examples of the ions that are implanted into the polymer layer include ions of a rare gas such as argon, helium, neon, krypton, and xenon; ions of fluorocarbon, hydrogen, nitrogen, oxygen, carbon dioxide, chlorine, fluorine, and sulfur; ions of an alkane-based gas such as methane and ethane; ions of an alkene-based gas such as ethylene and propylene; ions of an alkadiene-based gas such as pentadiene and butadiene; ions of an alkyne-based gas such as acetylene; ions of an aromatic hydrocarbon-based gas such as benzene and toluene; ions of a cycloalkane-based gas such as cyclopropane; ions of a cycloalkene-based gas such as cyclopentene; ions of a metal; ions of an organosilicon compound; and the like.

These ions may be used either alone or in combination.

It is preferable to use ions of a rare gas such as argon, helium, neon, krypton, or xenon due to ease of ion implantation and a capability to form a barrier layer that exhibits an excellent gas barrier capability.

The ion implantation dose may be appropriately determined taking account of the intended use of the laminate (e.g., gas barrier capability and transparency), and the like.

Ions may be implanted by applying ions (ion beams) accelerated by applying an electric field, implanting ions present in plasma (plasma ion implantation method), or the like. It is preferable to use the plasma ion implantation method since the desired barrier layer can be easily obtained.

The plasma ion implantation method may be implemented by generating plasma in an atmosphere containing a plasma-generating gas (e.g., rare gas), and implanting ions (cations) present in the plasma into the surface area of the polymer layer by applying a negative high-voltage pulse to the polymer layer, for example.

The thickness of the ion implantation target area may be controlled by adjusting the implantation conditions (e.g., type of ions, applied voltage, and implantation time), and may be determined taking account of the thickness of the polymer layer, the intended use of the laminate, and the like. The thickness of the ion implantation target area is normally 10 to 400 nm.

The arithmetic average roughness (Ra) of the front side (surface) of the first barrier layer and the arithmetic average roughness (Ra) of the front side (surface) of the second barrier layer are preferably 8 nm or less. The total height (Rt) of the roughness profile (maximum roughness height) of the front side (surface) of the first barrier layer and the total height (Rt) of the roughness profile (maximum roughness height) of the front side (surface) of the second barrier layer are preferably less than 150 nm. Note that the front side (surface) of the first barrier layer refers to the side of the first barrier layer where the organic intermediate layer and the second barrier layer are stacked, and the front side (surface) of the second barrier layer refers to the side of the second barrier layer that is situated opposite to the side where the first barrier layer and the organic intermediate layer are stacked. When the arithmetic average roughness and the total height of the first barrier layer are within the above ranges, deterioration in gas barrier capability rarely occurs even when a thermal load is applied.

Organic intermediate layer

The organic intermediate layer included in the gas barrier unit is situated between the first barrier layer and the second barrier layer, and has a modulus of elasticity at 90°C of 1.5 GPa or more. Since the laminate according to one embodiment of the invention includes the gas barrier unit that includes the organic intermediate layer, the laminate according to one embodiment of the invention rarely shows deterioration in gas barrier capability even when a thermal load is applied.

The organic intermediate layer has a modulus of elasticity at 90°C of 1.5 GPa or more, preferably 1.5 to 5.0 GPa, and more preferably 2.0 to 4.0 GPa. When the organic intermediate layer has a modulus of elasticity at 90°C of 1.5 GPa or more, the laminate rarely shows deterioration in gas barrier capability even when a thermal load is applied.

The organic intermediate layer preferably has a modulus of elasticity at 25°C of 3.2 GPa or more, and more preferably 3.2 to 5.0 GPa. When the modulus of elasticity at 25°C of the organic intermediate layer is within the above range, it is possible to easily obtain a laminate that exhibits excellent flexibility.

The organic intermediate layer preferably has a modulus of elasticity at 60°C of 2.3 GPa or more, and more preferably 2.3 to 4.5 GPa. When the modulus of elasticity at 60°C of the organic intermediate layer is within the above range, it is possible to easily obtain a laminate that rarely shows deterioration in gas barrier capability even when a thermal load is applied.

The modulus of elasticity of the organic intermediate layer may be measured using a known method (e.g., a nanoindentation method that utilizes a nanohardness tester). Note that the modulus of elasticity of the organic intermediate layer may be measured using the method described later in connection with the examples in a state in which the organic intermediate layer is stacked on the base.

The organic intermediate layer is formed of a cured product of an energy ray-curable composition. The organic intermediate layer is preferably formed by applying a curable composition to the first barrier layer to form a curable film, and curing the curable film. It is advantageous to form the curable film using a coating (application) method since 1) a curable film and an organic intermediate layer having a relatively large thickness can be efficiently formed, 2) the curable film and the organic intermediate layer can be formed using a material having a relatively high molecular weight, 3) the curable film and the organic intermediate layer can be formed without significantly changing the compositional ratio of the components included in the curable composition, and 4) an organic intermediate layer that exhibits excellent adhesion to the barrier layer can be formed.

The organic intermediate layer can be formed by curing the curable film by applying energy rays to the curable film.

It is possible to effect a sufficient curing reaction by utilizing an energy ray-curable composition, and efficiently form an organic intermediate layer having a modulus of elasticity at 90°C of 1.5 GPa or more.

Specifically, it may be difficult to sufficiently heat a heat-curable composition since deterioration in the performance of the resulting laminate, or a decrease in productivity may occur, and it may be difficult to effect a sufficient curing reaction. These problems do not occur when using an energy ray-curable composition.

Moreover, since an energy ray-curable composition can be cured at a moderate temperature, it is possible to suppress volatilization of a low-boiling-point component. Therefore, it is possible to form the organic intermediate layer without significantly changing the compositional ratio of the components included in the curable film.

It is more preferable to form the organic intermediate layer by applying an energy ray-curable composition to the first barrier layer to form a curable film, and curing the curable film by applying energy rays to the curable film.

It is possible to form a curable film that exhibits excellent curability (irrespective of the thickness of the curable film) by utilizing an energy ray-curable composition, and efficiently form a curable film having a given thickness by utilizing

a coating (application) method. This makes it possible to efficiently adjust the thickness of the organic intermediate layer having high modulus of elasticity, and efficiently control the ratio (X/Y1) of the thickness (X) of the organic intermediate layer to the thickness (Y1) of the first barrier layer, and the ratio (X/Y2) of the thickness (X) of the organic intermediate layer to the thickness (Y2) of the second barrier layer.

The term "energy ray-curable composition" used herein refers to a composition that normally includes a polyfunctional monomer or oligomer, and a photoinitiator, and is cured upon application of energy rays.

The energy ray-curable composition includes an energy ray-curable composition that includes a polyfunctional (meth)acrylic-based compound (hereinafter may be referred to as "(meth)acrylate-based energy ray-curable composition"). Note that the term "(meth)acrylate" refers to "acrylate" or "methacrylate".

A (meth)acrylate-based energy ray-curable composition is used since it is possible to more easily form an organic intermediate layer having the desired modulus of elasticity, and improve adhesion to the barrier layer.

The polyfunctional (meth)acrylic-based compound included in the (meth)acrylate-based energy ray-curable composition preferably includes three or more (meth)acrylic groups, and more preferably 3 to 6 (meth)acrylic groups. When the polyfunctional (meth)acrylic-based compound includes three or more (meth)acrylic groups, it is possible to more easily obtain an organic intermediate layer having the desired modulus of elasticity.

The molecular weight of the polyfunctional (meth)acrylic-based compound is preferably 350 to 5,000, and more preferably 400 to 4,000. When the molecular weight of the polyfunctional (meth)acrylic-based compound is within the above range, it is possible to more efficiently effect a curing reaction, and more easily obtain an organic intermediate layer having the desired modulus of elasticity. Examples of the polyfunctional (meth)acrylic-based compound include a polyfunctional (meth)acrylate-based monomer, a polyfunctional (meth)acrylate-based resin, and the like.

Examples of the polyfunctional (meth)acrylate-based monomer include a trifunctional (meth)acrylate compound such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, and tris(acryloyloxyethyl) isocyanurate; a tetrafunctional (meth)acrylate compound such as diglycerol tetra(meth)acrylate and pentaerythritol tetra(meth)acrylate; a pentafunctional (meth)acrylate compound such as dipentaerythritol penta(meth)acrylate and propionic acid-modified dipentaerythritol penta(meth)acrylate; a hexafunctional (meth)acrylate compound such as dipentaerythritol hexa(meth)acrylate and caprolactone-modified dipentaerythritol hexa(meth)acrylate; and the like.

Examples of the polyfunctional (meth)acrylate-based resin include a urethane (meth)acrylate-based resin, a polyester (meth)acrylate-based resin, an epoxy (meth)acrylate-based resin, and the like.

Examples of the urethane (meth)acrylate-based resin include a resin obtained by reacting a hydroxyl group-containing (meth)acrylate-based compound, a polyisocyanate-based compound, and a polyol-based compound, and the like.

Examples of the hydroxyl group-containing (meth)acrylate-based compound include a hydroxyalkyl (meth)acrylate such as 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate, 2-hydroxyethylacryloyl phosphate, 2-(meth)acryloyloxyethyl-2-hydroxypropyl phthalate, a caprolactone-modified 2-hydroxyethyl (meth)acrylate, dipropylene glycol (meth)acrylate, a fatty acid-modified glycidyl (meth)acrylate, polyethylene glycol mono(meth)acrylate, polypropylene glycol mono(meth)acrylate, 2-hydroxy-3-(meth)acryloyloxypropyl (meth)acrylate, glycerol di(meth)acrylate, 2-hydroxy-3-acryloyloxypropyl methacrylate, pentaerythritol tri(meth)acrylate, a caprolactone-modified pentaerythritol tri(meth)acrylate, an ethylene oxide-modified pentaerythritol tri(meth)acrylate, dipentaerythritol penta(meth)acrylate, a caprolactone-modified dipentaerythritol penta(meth)acrylate, an ethylene oxide-modified dipentaerythritol penta(meth)acrylate, and the like.

Examples of the polyisocyanate-based compound include an aromatic polyisocyanate such as tolylene diisocyanate, diphenylmethane diisocyanate, polyphenylmethane polyisocyanate, a modified diphenylmethane diisocyanate, xylylene diisocyanate, tetramethylxylylene diisocyanate, phenylene diisocyanate, and naphthalene diisocyanate; an aliphatic polyisocyanate such as hexamethylene diisocyanate, trimethylhexamethylene diisocyanate, lysine diisocyanate, and lysine triisocyanate; an alicyclic polyisocyanate such as a hydrogenated diphenylmethane diisocyanate, a hydrogenated xylylene diisocyanate, isophorone diisocyanate, norbornene diisocyanate, and 1,3-bis(isocyanatomethyl)cyclohexane; a trimer compound or a multimer compound of these polyisocyanates; an allophanate-type polyisocyanate; a biuret-type polyisocyanate; a water-dispersion-type polyisocyanate (e.g., "Aquanate 100", "Aquanate 110", "Aquanate 200", and "Aquanate 210" manufactured by Nippon Polyurethane Industry Co., Ltd.); and the like.

Examples of the polyol-based compound include a polyether polyol such as alkylene structure-containing polyether polyol such as polyethylene glycol, polypropylene glycol, polytetramethylene glycol, polybutylene glycol, and polyhexamethylene glycol; a polyester polyol such as a reaction product of a polyhydric alcohol such as ethylene glycol or diethylene glycol, a polycarboxylic acid such as malonic acid, maleic acid, or fumaric acid, and a cyclic ester such as propiolactone, β-methyl-δ-valerolactone, or ε-caprolactone; a polycarbonate-based polyol such as a reaction product of a polyhydric alcohol and phosgene, and a ring-opening polymer of a cyclic carbonic ester (e.g., an alkylene carbonate such as ethylene carbonate, trimethylene carbonate, tetramethylene carbonate, or hexamethylene carbonate); a polyolefin-based polyol such as a polyolefin-based polyol that includes a homopolymer or a copolymer of ethylene, propylene, butene, or the like as a saturated hydrocarbon skeleton, and includes a hydroxyl group at the molecular terminal; a polybutadiene-based polyol such as a polybutadiene-based polyol that includes a copolymer of butadiene as a hydrocarbon skeleton, and includes a hydroxyl group at the molecular terminal; a (meth)acrylic-based polyol such as a (meth)acrylic-based polyol that includes at least two hydroxyl groups in the molecule of a polymer or a copolymer of a (meth)acrylate such as methyl (meth)acrylate, ethyl (meth)acrylate, propyl (meth)acrylate, butyl (meth)acrylate, or 2-ethylhexyl (meth)acrylate; a polysiloxane-based polyol such as a dimethylpolysiloxane polyol and a methylphenylpolysiloxane polyol; and the like.

Examples of a commercially-available product of the urethane (meth)acrylate-based resin include SHIKOH UT-4690 and SHIKOH UT-4692 (manufactured by Nippon Synthetic Chemical Industry Co., Ltd.); and the like.

Examples of the polyester (meth)acrylate-based resin include a compound obtained by esterifying the hydroxyl groups of a polyester oligomer with (meth)acrylic acid, the polyester oligomer being obtained by dehydration and condensation of a polybasic carboxylic acid (anhydride) and a polyol, and having a hydroxyl group at each terminal, a compound obtained by esterifying the terminal hydroxyl group of an oligomer with (meth)acrylic acid, the oligomer being obtained by adding an alkylene oxide to a polycarboxylic acid, and the like.

Examples of the polybasic carboxylic acid (anhydride) used to produce the polyester (meth)acrylate-based resin include succinic acid (anhydride), adipic acid, maleic acid (anhydride), itaconic acid (anhydride), trimellitic acid (anhydride), pyromellitic acid (anhydride), hexahydrophthalic acid (anhydride), phthalic acid (anhydride), isophthalic acid, terephthalic acid, and the like. Examples of the polyol include 1,4-butanediol, 1,6-hexanediol, diethylene glycol, triethylene glycol, propylene glycol, dimethylolheptane, trimethylolpropane, pentaerythritol, dipentaerythritol, and the like.

Examples of the epoxy (meth)acrylate-based resin include a compound obtained by reacting (meth)acrylic acid with the oxirane ring of a bisphenol-type epoxy resin or a novolac-type epoxy resin having a relatively low molecular weight to effect esterification, and the like.

A commercially-available product may be used directly as these compounds.

One type of polyfunctional (meth)acrylate-based monomer, or two or more types of polyfunctional (meth)acrylate-based monomers may be used as the polyfunctional (meth)acrylic-based compound, and one type of polyfunctional (meth)acrylate-based resin, or two or more types of polyfunctional (meth)acrylate-based resins may be used as the polyfunctional (meth)acrylic-based compound. One or more types of polyfunctional (meth)acrylate-based monomers and one or more types of polyfunctional (meth)acrylate-based resins may be used in combination as the polyfunctional (meth)acrylic-based compound.

It is preferable to use a trifunctional (meth)acrylate compound (e.g., ethoxylated isocyanuric acid triacrylate), a hexafunctional (meth)acrylate compound (e.g., dipentaerythritol hexa(meth)acrylate), a urethane (meth)acrylate-based resin, or a combination thereof, as the polyfunctional (meth)acrylic-based compound.

In particular, an organic intermediate layer having a high modulus of elasticity is obtained when a polyfunctional (meth)acrylic-based compound that includes a large number of functional groups is used, and the resulting laminate shows only a small amount of curling when a polyfunctional (meth)acrylic-based compound that includes a small number of functional groups is used. The desired laminate can be formed by appropriately combining these polyfunctional (meth)acrylic-based compounds.

The photo initiator included in the energy ray-curable composition is not particularly limited. A known photoinitiator may be used as the photoinitiator. Examples of the photoinitiator include a benzoin compound such as 2,4,6-trimethylbenzoyldiphenylphosphine oxide, benzoin, benzoin methyl ether, benzoin ethyl ether, benzoin isopropyl ether, benzoin n-butyl ether, and benzoin isobutyl ether; an acetophenone compound such as acetophenone, dimethylaminoacetophenone, 2,2-dimethoxy-2-phenylacetophenone, and 2,2-diethoxy-2-phenylacetophenone; an $\alpha$-hydroxyalkylphenone compound such as 2-hydroxy-2-methyl-1-phenylpropan-1-one, 1-hydroxycyclohexyl phenyl ketone, 2-methyl-1-[4-(methylthio)phenyl]-2-morpholinopropan-1-one, 4-(2-hydroxyethoxy)phenyl 2-(hydroxyl-2-propyl) ketone, and 2-hydroxy-1-{4-[4-(2-hydroxy-2-methylpropionyl)benzyl]phenyl}-2-methyl-propan-1-one; a benzophenone compound such as benzophenone, p-phenylbenzophenone, 4,4'-diethylaminobenzophenone, and dichlorobenzophenone; an anthraquinone compound such as 2-methylanthraquinone, 2-ethylanthraquinone, 2-t-butylanthraquinone, and 2-aminoanthraquinone; a thioxanthone compound such as 2-methylthioxanthone, 2-ethylthioxanethone, 2-chlorothioxanthone, 2,4-dimethylthioxanethone, and 2,4-diethylthioxanthone; a dimethyl ketal compound such as benzyl dimethyl ketal and acetophenone dimethyl ketal; a p-dimethylaminobenzoic ester; oligo[2-hydroxy-2-methyl-1-[4-(1-methylvinyl)phenyl]propanone]; and the like.

The photoinitiator is preferably used in a ratio of 0.1 to 7 mass%, and more preferably 1 to 5 mass%, based on the solid content in the energy ray-curable composition.

The energy ray-curable composition includes silica microparticles that include a functional group (e.g., (meth)acrylic group) (hereinafter may be referred to as "reactive silica microparticles").

It is possible to further increase the modulus of elasticity of the organic intermediate layer, and obtain a laminate that rarely shows deterioration in gas barrier capability even when a thermal load is applied, by utilizing the energy ray-curable composition that includes the reactive silica microparticles.

The reactive silica microparticles may be obtained by modifying silica microparticles using a functional group-containing compound that can react with the surface silanol group of the silica microparticles.

Examples of the functional group-containing compound include acrylic acid, acrylic chloride, 2-isocyanatoethyl acrylate, glycidyl acrylate, 2,3-iminopropyl acrylate, 2-hydroxyethyl acrylate, acryloyloxypropyltrimethoxysilane, and the like.

The content of the reactive silica microparticles in the energy ray-curable composition is 5 to 30 mass%, and preferably 10 to 20 mass%, based on the solid content in the energy ray-curable composition.

The energy ray-curable composition may include an additional component as long as the advantageous effects of the invention are not impaired.

Examples of the additional component include an additive such as a silane coupling agent, an antistatic agent, a light stabilizer, an antioxidant, a UV absorber, a resin stabilizer, a filler, a pigment, an extender, and a softener.

These additives may be used either alone or in combination.

The content of each additional component in the energy ray-curable composition is preferably 0.01 to 5 mass%, and more preferably 0.01 to 2 mass%, based on the solid content in the energy ray-curable composition.

The energy ray-curable composition may be prepared by appropriately mixing and stirring the polyfunctional monomer or oligomer, the photoinitiator, a solvent, and the like using a normal method.

Examples of the solvent include an aromatic hydrocarbon-based solvent such as benzene and toluene; an ester-based solvent such as ethyl acetate and butyl acetate; a ketone-based solvent such as acetone, methyl ethyl ketone, and methyl isobutyl ketone; an aliphatic hydrocarbon-based solvent such as n-pentane, n-hexane, and n-heptane; an alicyclic hydrocarbon-based solvent such as cyclopentane and cyclohexane; and the like.

These solvents may be used either alone or in combination.

The organic intermediate layer may be formed using the energy ray-curable composition by applying the energy ray-curable composition to the first barrier layer to form a curable film, drying the curable film, optionally heating the dried curable film, and curing the curable film by applying energy rays to the curable film, for example.

The energy ray-curable composition may be applied using a bar coating method, a spin coating method, a dipping method, a roll coating method, a gravure coating method, a knife coating method, an air-knife coating method, a roll knife coating method, a die coating method, a screen printing method, a spray coating method, a gravure offset method, or the like. The curable film may be dried using a known drying method such as hot-air drying, heat roll drying, or infrared irradiation. The heating temperature is normally 60 to 130°C. The heating time is normally several seconds to several tens of minutes.

Examples of the energy rays used to cure the curable film include UV rays, electron beams, and the like.

It is preferable to use UV rays when it is desired to ensure an excellent device handling capability, and it is preferable to use electron beams when use of a photoinitiator is not desired.

UV rays may be generated using a high-pressure mercury lamp, an electrodeless lamp, a xenon lamp, an LED lamp, or the like. Electron beams may be generated using an electron beam accelerator or the like.

The dose of the energy rays is appropriately selected taking account of the object. When using UV rays, the irradiance is preferably set to 50 to 1,000 $mW/cm^2$, and the dose is preferably set to 50 to 1,000 $mJ/cm^2$. When using electron beams, the dose is preferably set to 10 to 1,000 krad.

The irradiation time is normally several seconds to several hours, and the irradiation temperature is normally room temperature (25°C) to 100°C.

The thickness of the organic intermediate layer is not particularly limited as long as the ratio (X/Y1) of the thickness (X) of the organic intermediate layer to the thickness (Y1) of the first barrier layer is 3 to 18, and the ratio (X/Y2) of the thickness (X) of the organic intermediate layer to the thickness (Y2) of the second barrier layer is 3 to 18 (described later). The thickness (X) of the organic intermediate layer is normally 300 nm to 3 μm, and preferably 500 nm to 2 μm.

The arithmetic average roughness (Ra) of the front side (surface) of the organic intermediate layer is preferably 8 nm or less, and the total height (Rt) of the roughness profile of the front side (surface) of the organic intermediate layer is preferably less than 150 nm. Note that the front side (surface) of the organic intermediate layer refers to the side of the organic intermediate layer where the second barrier layer is stacked (i.e., the side opposite to the base and the first barrier layer). When the arithmetic average roughness (Ra) and the total height (Rt) of the organic intermediate layer are within the above ranges, the second barrier layer rarely shows defects (e.g., pinholes), and cracks rarely occur in the second barrier layer when a thermal load is applied. Therefore, the laminate rarely shows deterioration in gas barrier capability.

Layer configuration of gas barrier unit

The gas barrier unit has a structure in which the ratio (X/Y1) of the thickness (X) of the organic intermediate layer to the thickness (Y1) of the first barrier layer, and the ratio (X/Y2) of the thickness (X) of the organic intermediate

layer to the thickness (Y2) of the second barrier layer are 3 to 18 (preferably 4 to 17). If the ratio (X/Y1) and the ratio (X/Y2) are less than 3, cracks may easily occur in the barrier layer when a thermal load is applied, and the laminate may show deterioration in gas barrier capability. If the ratio (X/Y1) and the ratio (X/Y2) exceed 18, the laminate may easily curl, and may not be suitable as an electronic device member.

The total thickness (Y) of the first barrier layer and the second barrier layer is not particularly limited, but is normally 30 to 500 nm, and preferably 50 to 400 nm.

When the total thickness (Y) of the first barrier layer and the second barrier layer is within the above range, it is possible to efficiently produce the laminate according to one embodiment of the invention.

(3) Layer configuration of laminate

The laminate according to one embodiment of the invention includes the base and the gas barrier unit. The laminate according to one embodiment of the invention may further include an additional layer other than the base and the gas barrier unit.

Examples of the additional layer other than the base and the gas barrier unit include a primer layer that is used to improve interlayer adhesion between the base and the gas barrier unit, a conductive layer, an impact-absorbing layer, a pressure-sensitive adhesive layer, a casting sheet, and the like. The additional layer may be situated (stacked) at an arbitrary position. Specifically, the position of the additional layer may be arbitrarily determined. The casting sheet protects the laminate during storage, transportation, and the like. The casting sheet is removed when the laminate is used. The laminate according to one embodiment of the invention preferably includes the primer layer between the base and the gas barrier unit in order to improve interlayer adhesion between the base and the gas barrier unit.

FIG. 1 illustrates examples of the laminate according to one embodiment of the invention (see (a) to (c)).

A laminate (10A) illustrated in FIG. 1 (see (a)) has a structure in which a base (1), a barrier layer (2a), an organic intermediate layer (3), and a barrier layer (2b) are sequentially stacked.

The laminate (10A) is formed so that a gas barrier unit (4) that includes the first barrier layer (2a), the organic intermediate layer (3), and the second barrier layer (2b) meets the above requirements, and falls within the scope of the invention.

A laminate (10B) illustrated in FIG. 1 (see (b)) has a structure in which a base (1), a primer layer (5), a barrier layer (2a), an organic intermediate layer (3), and a barrier layer (2b) are sequentially stacked.

The laminate (10B) is formed so that a gas barrier unit (4) that includes the first barrier layer (2a), the organic intermediate layer (3), and the second barrier layer (2b) meets the above requirements, and falls within the scope of the invention.

A laminate (10C) illustrated in FIG. 1 (see (c)) has a structure in which a base (1), a barrier layer (2a), an organic intermediate layer (3a), a barrier layer (2b), an organic intermediate layer (3b), and a barrier layer (2c) are sequentially stacked.

The laminate (10C) is formed so that a gas barrier unit (4a) that includes the first barrier layer (2a), the organic intermediate layer (3a), and the second barrier layer (2b), and a gas barrier unit (4b) that includes the first barrier layer (2b), the organic intermediate layer (3b), and the second barrier layer (2c) meet the above requirements, and falls within the scope of the invention.

The laminate according to one embodiment of the invention may include a plurality of gas barrier units (see the laminate (10C)).

The laminate according to one embodiment of the invention may be produced using an arbitrary method.

For example, the laminate (10A) may be produced by forming the barrier layer (2a) on the base (1) using the above method, forming the organic intermediate layer (3) on the barrier layer (2a) using the above method, and forming the barrier layer (2b) on the organic intermediate layer (3) using the above method.

The barrier layer (2b) may be formed directly on the organic intermediate layer (3), or may be formed by transferring a barrier layer formed on a casting sheet in advance to the organic intermediate layer (3).

It is preferable to produce the laminate according to one embodiment of the invention using the method for producing a laminate according to one embodiment of the invention (described later).

The laminate according to one embodiment of the invention exhibits an excellent gas barrier capability, and rarely shows deterioration in gas barrier capability even when a thermal load is applied.

The laminate according to one embodiment of the invention exhibits an excellent gas barrier capability since the laminate according to one embodiment of the invention has a low water vapor transmission rate, for example. The water vapor transmission rate of the laminate according to one embodiment of the invention at a temperature of 40°C and a relative humidity of 90% is preferably 10 mg/($m^2$·day) or less, and more preferably 1 mg/($m^2$·day) or less.

The water vapor transmission rate of the laminate may be measured using a known gas transmission rate measurement device.

The gas barrier capability of the laminate can be controlled by adjusting the thickness of each barrier layer, the

number of barrier layers, and the like.

The laminate according to one embodiment of the invention rarely shows deterioration in gas barrier capability even when a thermal load is applied since the laminate according to one embodiment of the invention shows a low water vapor transmission rate increase ratio when the laminate is allowed to stand at a high temperature and a high humidity for a long time, for example. For example, the water vapor transmission rate increase ratio when the laminate is allowed to stand at a temperature of 60°C and a relative humidity of 90% for 150 hours is preferably 300% or less, more preferably 10% or less, and still more preferably 5% or less.

A laminate that rarely shows deterioration in gas barrier capability even when a thermal load is applied can be obtained by utilizing a gas barrier unit that meets the above requirements.

The laminate according to one embodiment of the invention preferably curls to only a small extent.

For example, when the laminate has a square shape (10×10 cm), the total amount of lifting measured at the edge of the laminate is preferably 3 cm or less, and more preferably 1 cm or less.

The amount of curling of the laminate can be controlled by adjusting the number of functional groups included in the monomer or the resin used to form the organic intermediate layer.

The laminate according to one embodiment of the invention that exhibits the above properties may preferably be used as a member for an electronic device such as a liquid crystal display, an organic EL display, an inorganic EL display, electronic paper, and a solar cell.

2) Method for producing laminate

The method for producing a laminate according to one embodiment of the invention includes forming the first barrier layer on the base either directly or through an additional layer (step (I)); applying an energy ray-curable composition to the first barrier layer under atmospheric pressure to form a curable film, and curing the curable film by applying energy rays to the curable film to form the organic intermediate layer having a modulus of elasticity at 90°C of 1.5 GPa or more so that the ratio (X/Y1) of the thickness (X) of the organic intermediate layer to the thickness (Y1) of the first barrier layer is 3 to 18 (step (II)); and forming the second barrier layer on the organic intermediate layer so that the ratio (X/Y2) of the thickness (X) of the organic intermediate layer to the thickness (Y2) of the second barrier layer is 3 to 18 (step (III)).

In the step (I), the first barrier layer may be formed in the same manner as described above in connection with the laminate.

In the step (II), the curable film and the organic intermediate layer may be formed in the same manner as described above in connection with the laminate.

In the step (III), the second barrier layer may be formed in the same manner as described above in connection with the laminate.

The method for producing a laminate according to one embodiment of the invention can efficiently produce the laminate according to one embodiment of the invention. In particular, since the step (II) forms the curable film by applying the energy ray-curable composition, and cures the curable film by applying energy rays to the curable film, it is possible to efficiently form the organic intermediate layer that has a large thickness and high modulus of elasticity, and efficiently control the ratio (X/Y1) of the thickness (X) of the organic intermediate layer to the thickness (Y1) of the first barrier layer, and the ratio (X/Y2) of the thickness (X) of the organic intermediate layer to the thickness (Y2) of the second barrier layer.

Since the step (II) forms the organic intermediate layer under atmospheric pressure, the method for producing a laminate according to one embodiment of the invention can achieve high productivity. The method for producing a laminate according to one embodiment of the invention can form the organic intermediate layer having almost the same composition as that of the energy ray-curable composition, and efficiently produce a laminate in which adhesion between the barrier layer and the organic intermediate layer is improved.

3) Electronic device member and electronic device

An electronic device member according to one embodiment of the invention includes the laminate according to one embodiment of the invention. Therefore, the electronic device member according to one embodiment of the invention exhibits an excellent gas barrier capability, and can prevent deterioration in an element (member or device) due to gas (e.g., water vapor). Since the electronic device member exhibits excellent durability, the electronic device member may suitably be used as a display member for a liquid crystal display, an EL display, and the like; a solar cell back side protective sheet; and the like.

An electronic device according to one embodiment of the invention includes the electronic device member according to one embodiment of the invention. Specific examples of the electronic device include a liquid crystal display, an organic EL display, an inorganic EL display, electronic paper, a solar cell, and the like.

Since the electronic device according to one embodiment of the invention includes the electronic device member that includes the laminate according to one embodiment of the invention, the electronic device exhibits an excellent gas

barrier capability and excellent durability.

EXAMPLES

The invention is further described below by way of examples. Only Example 8 is according to the invention; the other examples are for reference or comparison only.

The units "parts" and "%" used in connection with the examples respectively refer to "parts by mass" and "mass%" unless otherwise indicated.

The following polyfunctional (meth)acrylic-based compounds were used in connection with the examples.

Polyfunctional (meth)acrylic-based compound 1: dipentaerythritol hexaacrylate ("A-DPH" manufactured by Shin-Nakamura Chemical Co., Ltd., number of functional groups: 6, molecular weight: 578)

Polyfunctional (meth)acrylic-based compound 2: urethane (meth)acrylate-based compound ("SHIKOH UT-4690" manufactured by Nippon Synthetic Chemical Industry Co., Ltd., number of functional groups: 6, molecular weight: 1,100)

Polyfunctional (meth)acrylic-based compound 3: ethoxylated isocyanuric acid triacrylate ("A-9300" manufactured by Shin-Nakamura Chemical Co., Ltd., number of functional groups: 3, molecular weight: 423)

Polyfunctional (meth)acrylic-based compound 4: urethane (meth)acrylate-based compound ("SHIKOH UT-4692" manufactured by Nippon Synthetic Chemical Industry Co., Ltd., number of functional groups: 3, molecular weight: 2,400)

Polyfunctional (meth)acrylic-based compound 5: reactive silica microparticles ("MEK-AC-2101" manufactured by Nissan Chemical Industries, Ltd., solid content: 30%, silica microparticles surface-modified with an acryloyl group)

Polyfunctional (meth)acrylic-based compound 6: urethane (meth)acrylate-based compound ("SHIKOH UT-4695" manufactured by Nippon Synthetic Chemical Industry Co., Ltd., number of functional groups: 2, molecular weight: 18,000)

Polyfunctional (meth)acrylic-based compound 7: urethane (meth)acrylate-based compound ("SHIKOH UT-4697" manufactured by Nippon Synthetic Chemical Industry Co., Ltd., number of functional groups: 2, molecular weight: 14,000)

Polyfunctional (meth)acrylic-based compound 8: tricyclodecanedimethanol diacrylate ("A-DCP" manufactured by Shin-Nakamura Chemical Co., Ltd., number of functional groups: 2, molecular weight: 304)

Production Example 1: Preparation of energy ray-curable composition (A)

20 parts of the polyfunctional (meth)acrylic-based compound 1 was dissolved in 100 parts of methyl isobutyl ketone. A photoinitiator ("Irgacure127" manufactured by BASF) was added to the solution (in a ratio of 3% based on the solid content in the resulting energy ray-curable composition (A)) to prepare an energy ray-curable composition (A).

Production Example 2: Preparation of energy ray-curable composition (B)

An energy ray-curable composition (B) was prepared in the same manner as in Production Example 1, except that 20 parts of the polyfunctional (meth)acrylic-based compound 2 was used instead of 20 parts of the polyfunctional (meth)acrylic-based compound 1.

Production Example 3: Preparation of energy ray-curable composition (C)

An energy ray-curable composition (C) was prepared in the same manner as in Production Example 1, except that 20 parts of a mixture of the polyfunctional (meth)acrylic-based compound 1 and the polyfunctional (meth)acrylic-based compound 2 (mass ratio: 1:1) was used instead of 20 parts of the polyfunctional (meth)acrylic-based compound 1.

Production Example 4: Preparation of energy ray-curable composition (D)

An energy ray-curable composition (D) was prepared in the same manner as in Production Example 1, except that 20 parts of the polyfunctional (meth)acrylic-based compound 3 was used instead of 20 parts of the polyfunctional (meth)acrylic-based compound 1.

Production Example 5: Preparation of energy ray-curable composition (E)

An energy ray-curable composition (E) was prepared in the same manner as in Production Example 1, except

that 20 parts of a mixture of the polyfunctional (meth)acrylic-based compound 2 and the polyfunctional (meth)acrylic-based compound 3 (mass ratio: 1:1) was used instead of 20 parts of the polyfunctional (meth)acrylic-based compound 1.

Production Example 6: Preparation of energy ray-curable composition (F)

An energy ray-curable composition (F) was prepared in the same manner as in Production Example 1, except that 20 parts of a mixture of the polyfunctional (meth)acrylic-based compound 1 and the polyfunctional (meth)acrylic-based compound 4 (mass ratio: 1:1) was used instead of 20 parts of the polyfunctional (meth)acrylic-based compound 1.

Production Example 7: Preparation of energy ray-curable composition (G)

An energy ray-curable composition (G) was prepared in the same manner as in Production Example 1, except that 20 parts of the polyfunctional (meth)acrylic-based compound 4 was used instead of 20 parts of the polyfunctional (meth)acrylic-based compound 1.

Production Example 8: Preparation of energy ray-curable composition (H)

An energy ray-curable composition (H) was prepared in the same manner as in Production Example 1, except that 20 parts of a mixture of the polyfunctional (meth)acrylic-based compound 1 and the polyfunctional (meth)acrylic-based compound 5 (mass ratio: 3:1) was used instead of 20 parts of the polyfunctional (meth)acrylic-based compound 1.

Production Example 9: Preparation of energy ray-curable composition (I)

An energy ray-curable composition (I) was prepared in the same manner as in Production Example 1, except that 20 parts of the polyfunctional (meth)acrylic-based compound 6 was used instead of 20 parts of the polyfunctional (meth)acrylic-based compound 1.

Production Example 10: Preparation of energy ray-curable composition (J)

An energy ray-curable composition (J) was prepared in the same manner as in Production Example 1, except that 20 parts of the polyfunctional (meth)acrylic-based compound 7 was used instead of 20 parts of the polyfunctional (meth)acrylic-based compound 1.

Production Example 11: Preparation of energy ray-curable composition (K)

An energy ray-curable composition (K) was prepared in the same manner as in Production Example 1, except that 20 parts of the polyfunctional (meth)acrylic-based compound 8 was used instead of 20 parts of the polyfunctional (meth)acrylic-based compound 1.

Example 1

The energy ray-curable composition (A) obtained in Production Example 1 was applied to a polyethylene terephthalate (PET) film ("PET25 T-100" manufactured by Mitsubishi Plastics, Inc., thickness: 25 $\mu$m) (base) using a bar coating method, and the resulting film was heated (dried) at 70°C for 1 minute. UV rays were applied to the film (high-pressure mercury lamp, line speed: 20 m/min, cumulative intensity: 100 mJ/cm$^2$, peak intensity: 1.466 W, pass count: 2) using a UV-ray irradiation line to form a primer layer (thickness: 1 $\mu$m).

A perhydropolysilazane-containing liquid ("AZNL110-20" manufactured by AZ Electronic Materials) was spin-coated onto the primer layer, and the resulting film was heated at 120°C for 2 minutes to form a perhydropolysilazane layer (thickness: 150 nm). Argon (Ar) ions were implanted into the surface of the perhydropolysilazane layer using a plasma ion implantation apparatus to form a plasma ion-implanted perhydropolysilazane layer (hereinafter referred to as "barrier layer (1a)").

The energy ray-curable composition (A) obtained in Production Example 1 was applied to the barrier layer (1a) under atmospheric pressure using a bar coating method, and the resulting film was heated (dried) at 70°C for 1 minute. UV rays were applied to the film (high-pressure mercury lamp, line speed: 20 m/min, cumulative intensity: 100 mJ/cm$^2$, peak intensity: 1.466 W, pass count: 2) using a UV-ray irradiation line to form an organic intermediate layer (1a) (thickness: 1 $\mu$m).

A perhydropolysilazane-containing liquid ("AZNL110-20" manufactured by AZ Electronic Materials) was spin-coated onto the organic intermediate layer (1a), and the resulting film was heated at 120°C for 2 minutes to form a

perhydropolysilazane layer (thickness: 150 nm). Argon (Ar) ions were implanted into the surface of the perhydropolysilazane layer using a plasma ion implantation apparatus to form a plasma ion-implanted perhydropolysilazane layer (hereinafter referred to as "barrier layer (2a)") to obtain a laminate (I).

Note that the plasma ion implantation process used to form the barrier layer (1a) and the barrier layer (2a) was performed using the following apparatus under the following conditions.

Plasma ion implantation apparatus

RF power supply: "RF56000" manufactured by JEOL Ltd.
High-voltage pulse power supply: "PV-3-HSHV-0835" manufactured by Kurita Seisakusho Co., Ltd.

Plasma ion implantation conditions

Plasma-generating gas: Ar
Gas flow rate: 100 sccm
Duty ratio: 0.5%
Repetition frequency: 1,000 Hz
Applied voltage: -10 kV
RF power supply: frequency: 13.56 MHz, applied electric power: 1,000 W
Chamber internal pressure: 0.2 Pa
Pulse width: 5 μsec
Treatment time (ion implantation time): 5 min
Feed speed: 0.2 m/min

Example 2

A laminate (II) was obtained in the same manner as in Example 1, except that the energy ray-curable composition (B) obtained in Production Example 2 was used instead of the energy ray-curable composition (A) when forming the organic intermediate layer (1a).

Example 3

A laminate (III) was obtained in the same manner as in Example 1, except that the energy ray-curable composition (C) obtained in Production Example 3 was used instead of the energy ray-curable composition (A) when forming the organic intermediate layer (1a).

Example 4

A laminate (IV) was obtained in the same manner as in Example 1, except that the energy ray-curable composition (D) obtained in Production Example 4 was used instead of the energy ray-curable composition (A) when forming the organic intermediate layer (1a).

Example 5

A laminate (V) was obtained in the same manner as in Example 1, except that the energy ray-curable composition (E) obtained in Production Example 5 was used instead of the energy ray-curable composition (A) when forming the organic intermediate layer (1a).

Example 6

A laminate (VI) was obtained in the same manner as in Example 1, except that the energy ray-curable composition (F) obtained in Production Example 6 was used instead of the energy ray-curable composition (A) when forming the organic intermediate layer (1a).

Example 7

A laminate (VII) was obtained in the same manner as in Example 1, except that the energy ray-curable composition (G) obtained in Production Example 7 was used instead of the energy ray-curable composition (A) when forming the organic intermediate layer (1a).

Example 8

A laminate (VIII) was obtained in the same manner as in Example 1, except that the energy ray-curable composition (H) obtained in Production Example 8 was used instead of the energy ray-curable composition (A) when forming the organic intermediate layer (1a).

Example 9

The energy ray-curable composition (A) obtained in Production Example 1 was applied to a PET film ("PET25 T-100" manufactured by Mitsubishi Plastics, Inc., thickness: 25 μm) (base) using a bar coating method, and the resulting film was heated (dried) at 70°C for 1 minute. UV rays were applied to the film (high-pressure mercury lamp, line speed: 20 m/min, cumulative intensity: 100 $mJ/cm^2$, peak intensity: 1.466 W, pass count: 2) using a UV-ray irradiation line to form a primer layer (thickness: 1 μm).

An aluminum oxide layer (thickness: 150 nm) (hereinafter referred to as "barrier layer (1b)") was formed on the primer layer by reactive sputtering using a reactive sputtering apparatus under the following conditions.

The energy ray-curable composition (A) obtained in Production Example 1 was applied to the barrier layer (1b) under atmospheric pressure using a bar coating method, and the resulting film was heated (dried) at 70°C for 1 minute. UV rays were applied to the film (high-pressure mercury lamp, line speed: 20 m/min, cumulative intensity: 100 $mJ/cm^2$, peak intensity: 1.466 W, pass count: 2) using a UV-ray irradiation line to form an organic intermediate layer (1b) (thickness: 1 μm).

An aluminum oxide layer (thickness: 150 nm) (hereinafter referred to as "barrier layer (2b)") was formed on the organic intermediate layer (1b) by reactive sputtering using a reactive sputtering apparatus under the following conditions.

The energy ray-curable composition (A) obtained in Production Example 1 was applied to the barrier layer (2b) under atmospheric pressure using a bar coating method, and the resulting film was heated (dried) at 70°C for 1 minute. UV rays were applied to the film (high-pressure mercury lamp, line speed: 20 m/min, cumulative intensity: 100 $mJ/cm^2$, peak intensity: 1.466 W, pass count: 2) using a UV-ray irradiation line to form an organic intermediate layer (2b) (thickness: 1 μm).

An aluminum oxide layer (thickness: 150 nm) (hereinafter referred to as "barrier layer (3b)") was formed on the organic intermediate layer (2b) by reactive sputtering using a reactive sputtering apparatus under the following conditions to obtain a laminate (IX).

The barrier layers (1b) to (3b) were formed under the following conditions.

Plasma-generating gas: oxygen
Gas flow rate: 100 sccm (oxygen)
Target material: aluminum
Electric power: 2,500 W
Vacuum chamber internal pressure: 0.2 Pa

Example 10

A laminate (X) was obtained in the same manner as in Example 1, except that the thickness of the organic intermediate layer (1a) was changed to 0.5 μm.

Example 11

A laminate (XI) was obtained in the same manner as in Example 1, except that the thickness of the organic intermediate layer (1a) was changed to 2.5 μm.

Comparative Example 1

A laminate (XII) was obtained in the same manner as in Example 1, except that the energy ray-curable composition (I) obtained in Production Example 9 was used instead of the energy ray-curable composition (A) when forming

the organic intermediate layer (1a).

Comparative Example 2

A laminate (XIII) was obtained in the same manner as in Example 1, except that the energy ray-curable composition (J) obtained in Production Example 10 was used instead of the energy ray-curable composition (A) when forming the organic intermediate layer (1a).

Comparative Example 3

A laminate (XIV) was obtained in the same manner as in Example 1, except that the energy ray-curable composition (K) obtained in Production Example (XIV) was used instead of the energy ray-curable composition (A) when forming the organic intermediate layer (1a).

Comparative Example 4

The energy ray-curable composition (A) obtained in Production Example 1 was applied to a PET film ("PET25 T-100" manufactured by Mitsubishi Plastics, Inc., thickness: 25 μm) (base) using a bar coating method, and the resulting film was heated (dried) at 70°C for 1 minute. UV rays were applied to the film (high-pressure mercury lamp, line speed: 20 m/min, cumulative intensity: 100 $mJ/cm^2$, peak intensity: 1.466 W, pass count: 2) using a UV-ray irradiation line to form a primer layer (thickness: 1 μm).

An aluminum oxide layer (thickness: 150 nm) (hereinafter referred to as "barrier layer (1c)") was formed on the primer layer by reactive sputtering using a reactive sputtering apparatus under the same conditions as those employed in Example 9.

The energy ray-curable composition (I) obtained in Production Example 9 was applied to the barrier layer (1c) under atmospheric pressure using a bar coating method, and the resulting film was heated (dried) at 70°C for 1 minute. UV rays were applied to the film (high-pressure mercury lamp, line speed: 20 m/min, cumulative intensity: 100 $mJ/cm^2$, peak intensity: 1.466 W, pass count: 2) using a UV-ray irradiation line to form an organic intermediate layer (1c) (thickness: 1 μm).

An aluminum oxide layer (thickness: 150 nm) (hereinafter referred to as "barrier layer (2c)") was formed on the organic intermediate layer (1c) by reactive sputtering using a reactive sputtering apparatus under the same conditions as those employed in Example 9 to obtain a laminate (XV).

Comparative Example 5

A laminate (XVI) was obtained in the same manner as in Example 1, except that the thickness of the organic intermediate layer (1a) was changed to 0.3 μm.

Comparative Example 6

A laminate (XVII) was obtained in the same manner as in Example 1, except that the thickness of the organic intermediate layer (1a) was changed to 3 μm. The resulting laminate (XVII) curled to a large extent, and was not suitable for an electronic device member.

The properties of the laminates (I) to (XVII) obtained in Examples 1 to 11 and Comparative Examples 1 to 6 were measured as described below.

Modulus of elasticity of organic intermediate layer

The energy ray-curable composition (energy ray-curable compositions (A) to (K) obtained in Production Examples 1 to 11) was applied to a PET film ("PET25 T-100" manufactured by Mitsubishi Plastics, Inc., thickness: 25 μm) using a bar coating method, and the resulting film was heated (dried) at 70°C for 1 minute. UV rays were applied to the film (high-pressure mercury lamp, line speed: 20 m/min, cumulative intensity: 100 $mJ/cm^2$, peak intensity: 1.466 W, pass count: 2) using a UV-ray irradiation line to form an organic intermediate layer (thickness: 1 μm) (specimen).

The modulus of elasticity (GPa) of the surface of the organic intermediate layer (specimen) at 25°C, 60°C, and 90°C was measured by a nanoindentation method using a nanohardness tester ("DUH-W201-S" manufactured by Shimadzu Corporation). The measurement results are shown in Tables 1 and 2.

Measurement of water vapor transmission rate

The water vapor transmission rate ($g/m^2/day$) was measured using a water vapor transmission rate measurement device ("PERMATRAN" manufactured by MOCON) before and after subjecting the laminate to a durability test in which the laminate was allowed to stand at a temperature of 60°C and a relative humidity of 90% for 150 hours. The water vapor transmission rate increase ratio due to the durability test was calculated by the following expression. The durability was evaluated as "Good" when the water vapor transmission rate increase ratio was 10% or less, and evaluated as "Bad" when the water vapor transmission rate increase ratio was more than 10%. The results are shown in Tables 1 and 2.

Note that the water vapor transmission rate of the laminate obtained in Comparative Example 6 was not measured since the laminate obtained in Comparative Example 6 curled to a large extent (i.e., evaluated as "Bad"), and was not suitable for an electronic device member.

$$\text{Water vapor transmission rate increase ratio} = \{(A-B)/B\} \times 100$$

A: Water vapor transmission rate after durability test
B: Water vapor transmission rate before durability test

Evaluation of curling

A sample having a square shape (10×10 cm) was prepared. A case where the total amount of lifting measured at the edge of the sample was 3 cm or more was evaluated as "Bad", and a case where the total amount of lifting measured at the edge of the sample was 3 cm or less was evaluated as "Good". The evaluation results are shown in Tables 1 and 2.

TABLE 1

| | | Example | | | | | | | | |
|---|---|---|---|---|---|---|---|---|---|---|
| | | 1 | 2 | 3 | 4 | 5 | 6 | 7 | 8 | 9 |
| Laminate | | I | II | III | IV | V | VI | VII | VIII | IX |
| Energy ray-curable composition | Symbol | A | B | C | D | E | F | G | H | A |
| | Polytunctional (meth) acrylic-based compound | 1 | 2 | Mixture (1 and 2) | 3 | Mixture (2 and 3) | Mixture (1 and 4) | 4 | Mixture (1 and 5) | 1 |
| Modulus of elasticity (GPa) of organic intermediate layer | 25°C | 4.48 | 4.45 | 3.33 | 3.39 | 3.4 | 3.21 | 3.35 | 4.48 | 4.48 |
| | 60°C | 4.06 | 3.92 | 3.34 | 3.24 | 3.2 | 2.31 | 2.57 | 4.26 | 4.06 |
| | 90°C | 3.59 | 3.31 | 3.12 | 3.12 | 3.1 | 2.01 | 1.53 | 3.79 | 3.59 |
| Layer thickness (μm) | First barrier layer (Y1) | 0.15 | 0.15 | 0.15 | 0.15 | 0.15 | 0.15 | 0.15 | 0.15 | 0.15 |
| | First organic intermediate layer (X) (X/Y1) (X/Y2) | 1 (6.7) (6.7) | 1 (6.7) (6.7) | 1 (6.7) (6.7) | 1 (6.7) (6.7) | 1 (6.7) (6.7) | 1 (6.7) (6.7) | 1 (6.7) (6.7) | 1 (6.7) (6.7) | 1 (6.7) (6.7) |
| | Second barrier layer (Y2) | 0.15 | 0.15 | 0.15 | 0.15 | 0.15 | 0.15 | 0.15 | 0.15 | 0.15 |
| | Second organic intermediate layer (X2) (X2/Y2) (X2/Y3) | - | - | - | - | - | - | - | - | 1 (6.7) (6.7) |
| | Third barrier layer (Y3) | - | - | - | - | - | - | - | - | 0.15 |
| Water vapor transmission rate | Before durability test (mg/(m'- day)) | 0.50 | 0.50 | 0.50 | 0.50 | 0.50 | 0.50 | 0.50 | 0.50 | 9.00 |
| | After durability test (mg/($m^2$·day)) | 0.52 | 0.53 | 0.51 | 0.52 | 0.53 | 0.52 | 0.52 | 0.51 | 9.27 |
| | Increase ratio (%) | 4 | 6 | 2 | 4 | 6 | 4 | 3 | 1 | 3 |
| Durability | | Good | Good | Good | Good | Good | Good | Good | Good | Good |
| Curling | | Good | Good | Good | Good | Good | Good | Good | Good | Good |

TABLE 2

| | | Example | | Comparative Example | | | | | |
|---|---|---|---|---|---|---|---|---|---|
| | | 10 | 11 | 1 | 2 | 3 | 4 | 5 | 6 |
| Laminate | | X | XI | XII | XIII | XIV | XV | XVI | XVII |
| Energy ray-curable composition | Symbol | A | A | I | J | K | I | A | A |
| | Polytunctional (meth)acrylic-based compound | 1 | 1 | 6 | 7 | 8 | 6 | 1 | 1 |
| Modulus of elasticity (GPa) of organic intermediate layer | 25°C | 4.48 | 4.48 | 2.11 | 2.5 | 1.9 | 2.11 | 4.48 | 4.48 |
| | 60°C | 4.06 | 4.06 | 1.1 | 1.3 | 1.3 | 1.1 | 4.06 | 4.06 |
| | 90°C | 3.59 | 3.59 | 1.1 | 1.1 | 1.1 | 1.1 | 3.59 | 3.59 |
| Layer thickness (μm) | First barrier layer (Y1) | 0.15 | 0.15 | 0.15 | 0.15 | 0.15 | 0.15 | 0.15 | 0.15 |
| | First organic intermediate layer (X) (X/Y1) (X/Y2) | 0.5 (3.3) (3.3) | 2.5 (16.7) (16.7) | 1 (6.7) (6.7) | 1 (6.7) (6.7) | 1 (6.7) (6.7) | 1 (6.7) (6.7) | 0.3 (2) (2) | 3.0 (20) (20) |
| | Second barrier laver (Y2) | 0.15 | 0.15 | 0.15 | 0.15 | 0.15 | 0.15 | 0.15 | 0.15 |
| | Second organic intermediate layer (X2) (X2/Y2) (X2/Y3) | - | - | - | - | - | - | - | - |
| | Third barrier layer (Y3) | - | - | - | - | - | - | - | - |
| Water vapor transmission rate | Before durability test (mg/ ($m^2$·day)) | 0.50 | 0.50 | 0.50 | 0.50 | 0.50 | 9.00 | 0.50 | - |
| | After durability test (mg/ ($m^2$·day)) | 0.55 | 0.51 | 4.00 | 4.20 | 4.10 | 46.00 | 3.20 | |
| | Increase ratio (%) | 10 | 2 | 700 | 740 | 720 | 411 | 540 | |
| Durability | | Good | Good | Bad | Bad | Bad | Bad | Bad | |
| Curling | | Good | Good | Good | Good | Good | Good | Good | Bad |

The following were confirmed from the results shown in Tables 1.

The laminates obtained in Examples 1 to 11 exhibited an excellent gas barrier capability. The laminates obtained in Examples 1 to 11 rarely showed deterioration in gas barrier capability even when a thermal load was applied. The water vapor transmission rate changed to only a small extent due to the durability test, and the water vapor transmission rate increase ratio was 10% or less.

The laminates obtained in Comparative Examples 1 to 5 exhibited an excellent gas barrier capability before the durability test, but the water vapor transmission rate significantly increased due to the durability test, and a significant deterioration in gas barrier capability was observed.

The laminate obtained in Comparative Example 6 curled to a large extent, and was not suitable for an electronic device member.

REFERENCE SIGNS LIST

1: Base
2a, 2b, 2c: Barrier layer
3, 3a, 3b: Organic intermediate layer
4, 4a, 4b: Gas barrier unit
5: Primer layer
10A, 10B, 10C: Laminate

## Claims

1. A laminate comprising a base and a gas barrier unit,

   the gas barrier unit comprising a first barrier layer, a second barrier layer, and an organic intermediate layer that is situated between the first barrier layer and the second barrier layer, and has a modulus of elasticity at 90°C of 1.5 GPa or more, a ratio (X/Y1) of a thickness (X) of the organic intermediate layer to a thickness (Y1)of the first barrier layer being 3 to 18, and a ratio (X/Y2) of the thickness (X) of the organic intermediate layer to a thickness (Y2) of the second barrier layer being 3 to 18, **characterized in that**
   the organic intermediate layer is formed of a cured product of an energy ray-curable composition and
   the energy ray-curable composition comprises a polyfunctional (meth)acrylic-based compound and silica microparticles having a functional group.

2. The laminate according to claim 1, wherein the first barrier layer and the second barrier layer are formed of an inorganic deposited film, or obtained by implanting ions into a layer that includes a polymer compound.

3. The laminate according to claim 1, wherein the organic intermediate layer is formed by applying the energy ray-curable composition to the first barrier layer to form a curable film, and curing the curable film by applying energy rays to the curable film.

4. The laminate according to claim 1, wherein the polyfunctional (meth)acrylic-based compound is a compound that includes three or more (meth)acrylic groups.

5. The laminate according to claim 1 or 4, wherein the polyfunctional (meth)acrylic-based compound is a compound that has a molecular weight of 350 to 5,000.

6. The laminate according to claim 1, wherein the thickness (X) of the organic intermediate layer is 300 nm to 3 μm, the thickness (Y1) of the first barrier layer is 10 to 400 nm, the thickness (Y2) of the second barrier layer is 10 to 400 nm, and a total thickness (Y) of the first barrier layer and the second barrier layer is 30 to 500 nm.

7. The laminate according to claim 1, wherein the base, the barrier layer, the organic intermediate layer, and the barrier layer are sequentially stacked.

8. The laminate according to claim 1, wherein the base, the barrier layer, the organic intermediate layer, the barrier layer, the organic intermediate layer, and the barrier layer are sequentially stacked.

9. An electronic device member comprising the laminate according to any one of claims 1 to 8.

10. An electronic device comprising the electronic device member according to claim 9.

11. A method for producing the laminate according to any one of claims 1 to 6 that includes the base and the gas barrier unit, the method comprising:

    forming the first barrier layer on the base either directly or through an additional layer;
    applying an energy ray-curable composition to the first barrier layer under atmospheric pressure to form a curable film, and curing the curable film by applying energy rays to the curable film to form the organic intermediate

layer having a modulus of elasticity at 90°C of 1.5 GPa or more so that the ratio (X/Y1) of the thickness (X) of the organic intermediate layer to the thickness (Y1) of the first barrier layer is 3 to 18; and
forming the second barrier layer on the organic intermediate layer so that the ratio (X/Y2) of the thickness (X) of the organic intermediate layer to the thickness (Y2) of the second barrier layer is 3 to 18.

## Patentansprüche

1. Laminat, das eine Basis und eine Gasbarriereeinheit umfasst,

   wobei die Gassperreinheit eine erste Barriereschicht, eine zweite Barriereschicht und eine organische Zwischenschicht, die sich zwischen der ersten Barriereschicht und der zweiten Barriereschicht befindet und einen Elastizitätsmodul bei 90 °C von 1,5 GPa oder mehr aufweist, umfasst, wobei ein Verhältnis (X/Y1) einer Dicke (X) der organischen Zwischenschicht zu einer Dicke (Y1) der ersten Barriereschicht 3 bis 18 beträgt, und ein Verhältnis (X/Y2) der Dicke (X) der organischen Zwischenschicht zu einer Dicke (Y2) der zweiten Barriereschicht 3 bis 18 beträgt, **dadurch gekennzeichnet, dass**
   die organische Zwischenschicht aus einem gehärteten Produkt einer durch Energiestrahlen härtbaren Zusammensetzung gebildet wird und
   die durch Energiestrahlen härtbare Zusammensetzung eine polyfunktionelle Verbindung auf (Meth)acrylbasis und Siliziumdioxid-Mikropartikel mit einer funktionellen Gruppe enthält.

2. Laminat nach Anspruch 1, wobei die erste Barriereschicht und die zweite Barriereschicht aus einem anorganisch abgeschiedenen Film gebildet sind oder durch Implantation von Ionen in eine Schicht, die eine Polymerverbindung enthält, erhalten werden.

3. Laminat nach Anspruch 1, wobei die organische Zwischenschicht durch Auftragen der durch Energiestrahlen härtbaren Zusammensetzung auf die erste Sperrschicht zur Bildung eines härtbaren Films und Härten des härtbaren Films durch Einwirkenlassen von Energiestrahlen auf den härtbaren Film gebildet wird.

4. Laminat nach Anspruch 1, wobei die polyfunktionelle Verbindung auf (Meth)acrylbasis eine Verbindung ist, die drei oder mehr (Meth)acrylgruppen enthält.

5. Laminat nach Anspruch 1 oder 4, wobei die polyfunktionelle Verbindung auf (Meth)acrylbasis eine Verbindung mit einem Molekulargewicht von 350 bis 5.000 ist.

6. Laminat nach Anspruch 1, wobei die Dicke (X) der organischen Zwischenschicht 300 nm bis 3 $\mu$m beträgt, die Dicke (Y1) der ersten Sperrschicht 10 bis 400 nm beträgt, die Dicke (Y2) der zweiten Sperrschicht 10 bis 400 nm beträgt und die Gesamtdicke (Y) der ersten Sperrschicht und der zweiten Sperrschicht 30 bis 500 nm beträgt.

7. Laminat nach Anspruch 1, wobei die Basis, die Sperrschicht, die organische Zwischenschicht und die Sperrschicht nacheinander aufgestapelt sind.

8. Laminat nach Anspruch 1, wobei die Basis, die Sperrschicht, die organische Zwischenschicht, die Sperrschicht, die organische Zwischenschicht und die Sperrschicht nacheinander aufgestapelt sind.

9. Elektronisches Bauteil, das das Laminat nach einem der Ansprüche 1 bis 8 umfasst.

10. Elektronisches Gerät mit dem elektronischen Bauteil nach Anspruch 9.

11. Verfahren zur Herstellung des Laminats nach einem der Ansprüche 1 bis 6, das die Basis und die Gasbarriereeinheit umfasst, wobei das Verfahren umfasst:

    Bildung der ersten Sperrschicht auf der Basis entweder direkt oder durch eine zusätzliche Schicht;
    Aufbringen einer durch Energiestrahlen härtbaren Zusammensetzung auf die erste Sperrschicht unter Atmosphärendruck, um einen härtbaren Film zu bilden, und Härten des härtbaren Films durch Einwirkenlassen von Energiestrahlen auf den härtbaren Film, um die organische Zwischenschicht mit einem Elastizitätsmodul bei 90 °C von 1,5 GPa oder mehr zu bilden, so dass das Verhältnis (X/Y1) der Dicke (X) der organischen Zwischenschicht zur Dicke (Y1) der ersten Sperrschicht 3 bis 18 beträgt; und

Bilden der zweiten Sperrschicht auf der organischen Zwischenschicht, so dass das Verhältnis (X/Y2) zwischen der Dicke (X) der organischen Zwischenschicht und der Dicke (Y2) der zweiten Sperrschicht 3 bis 18 beträgt.

## Revendications

1. Stratifié comprenant une base et une unité de barrière aux gaz,

   l'unité de barrière aux gaz comprenant une première couche barrière, une seconde couche barrière et une couche intermédiaire organique qui est située entre la première couche barrière et la seconde couche barrière, et qui a un module d'élasticité à 90 °C de 1,5 GPa ou plus, un rapport (X/Y1) d'une épaisseur (X) de la couche intermédiaire organique à une épaisseur (Y1) de la première couche barrière étant de 3 à 18, et un rapport (X/Y2) de l'épaisseur (X) de la couche intermédiaire organique à une épaisseur (Y2) de la seconde couche barrière étant de 3 à 18, **caractérisé en ce que**
   la couche intermédiaire organique est formée d'un produit durci d'une composition durcissable par rayonnement énergétique et
   la composition durcissable par rayonnement énergétique comprend un composé polyfonctionnel à base de (méth)acrylique et des microparticules de silice ayant un groupe fonctionnel.

2. Stratifié selon la revendication 1, dans lequel la première couche barrière et la seconde couche barrière sont formées d'un film déposé inorganique, ou obtenues par implantation d'ions dans une couche qui comprend un composé polymère.

3. Stratifié selon la revendication 1, dans lequel la couche intermédiaire organique est formée en appliquant la composition durcissable par rayons énergétiques à la première couche barrière pour former un film durcissable, et en durcissant le film durcissable en appliquant des rayons énergétiques au film durcissable.

4. Stratifié selon la revendication 1, dans lequel le composé polyfonctionnel à base de (méth)acrylique est un composé qui comprend trois groupes (méth)acryliques ou plus.

5. Stratifié selon la revendication 1 ou 4, dans lequel le composé polyfonctionnel à base de (méth)acrylique est un composé qui a un poids moléculaire de 350 à 5 000.

6. Stratifié selon la revendication 1, dans lequel l'épaisseur (X) de la couche intermédiaire organique est de 300 nm à 3 μm, l'épaisseur (Y1) de la première couche barrière est de 10 à 400 nm, l'épaisseur (Y2) de la deuxième couche barrière est de 10 à 400 nm, et une épaisseur totale (Y) de la première couche barrière et de la deuxième couche barrière est de 30 à 500 nm.

7. Stratifié selon la revendication 1, dans lequel la base, la couche barrière, la couche intermédiaire organique et la couche barrière sont empilées séquentiellement.

8. Stratifié selon la revendication 1, dans lequel la base, la couche barrière, la couche intermédiaire organique, la couche barrière, la couche intermédiaire organique et la couche barrière sont empilées séquentiellement.

9. Elément de dispositif électronique comprenant le stratifié selon l'une quelconque des revendications 1 à 8.

10. Dispositif électronique comprenant l'élément de dispositif électronique selon la revendication 9.

11. Procédé de production du stratifié selon l'une quelconque des revendications 1 à 6 qui comprend la base et l'unité de barrière aux gaz, le procédé comprenant :

    former la première couche barrière sur la base, soit directement, soit par l'intermédiaire d'une couche supplémentaire ;
    l'application d'une composition durcissable par rayons énergétiques à la première couche barrière sous la pression atmosphérique pour former un film durcissable, et le durcissement du film durcissable par application de rayons énergétiques au film durcissable pour former la couche intermédiaire organique ayant un module d'élasticité à 90 °C de 1,5 GPa ou plus, de sorte que le rapport (X/Y1) de l'épaisseur (X) de la couche intermédiaire organique à l'épaisseur (Y1) de la première couche barrière soit de 3 à 18 ; et

former la seconde couche barrière sur la couche intermédiaire organique de sorte que le rapport (X/Y2) de l'épaisseur (X) de la couche intermédiaire organique à l'épaisseur (Y2) de la seconde couche barrière soit de 3 à 18.

FIG. 1

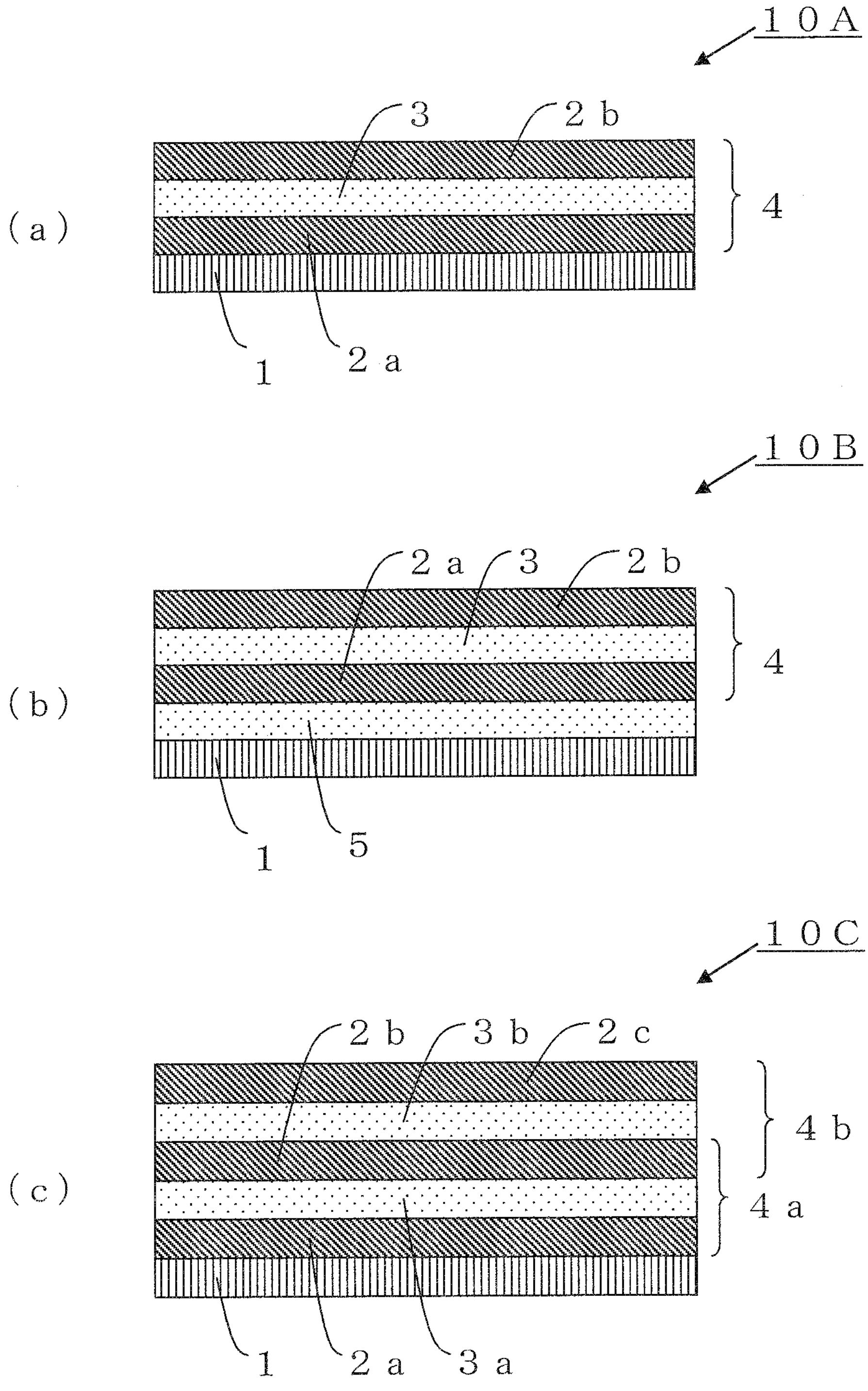

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006297737 A
- WO 2012115175 A1
- JP 2003335880 A
- JP 2003053881 A
- JP 2007253588 A
- JP 62195024 A
- JP 2084437 A
- JP 63081122 A
- JP 1138108 A
- JP 2175726 A
- JP 5238827 A
- JP 6122852 A
- JP 6306329 A
- JP 6299118 A
- JP 9031333 A
- JP 5345826 A
- JP 4063833 A
- JP 2012106421 A
- JP 2013226757 A